# EUROPÄISCHE PATENTSCHRIFT

(11) **EP 0 878 261 B1**
(45) Veröffentlichungstag und Bekanntmachung des Hinweises auf die Patenterteilung: **05.11.2003**
(21) Anmeldenummer: 98810327.1
(22) Anmeldetag: 15.04.1998
(51) Int. Cl.: B23B 51/02, E21B 10/26

(54) **Bohrwerkzeug**
Drilling tool
Outil de forage

(30) Priorität: 16.05.1997 DE 19720589
(43) Veröffentlichungstag der Anmeldung: 18.11.1998
(73) Patentinhaber: HILTI Aktiengesellschaft, 9494 Schaan (LI)
(72) Erfinder: Gschwend, Hans, 9470 Buchs (CH); Mark, Fritz, 6841 Mäder (AT); Schweizer, Erwin, 9496 Balzers (LI)
(74) Vertreter: Wildi, Roland

(56) Entgegenhaltungen:
- WO-A-97/04908
- DE-C- 3 414 206
- US-A- 2 773 672
- US-A- 5 423 824

## Beschreibung

Die Erfindung betrifft ein Bohrwerkzeug mit einem länglichen Schaft, dessen eines, rückwärtiges Ende als Einsteckende ausgebildet ist und der am gegenüberliegenden Vorderende mit Bohrschneiden ausgestattet ist, gemäss dem Oberbegriff des Patentanspruchs 1. Ein solches Bohrwerkzeug ist z.B. aus der US-A-2 773 672 bekannt.

Für die Erstellung von Befestigungen in unterschiedlich festen Untergründen werden verschiedene Verfahren eingesetzt. Am gebräuchlichsten sind sequentielle Verfahren und die Direkt-Montagetechnik. Sequentielle Befestigungsverfahren sind für alle Arten von Untergründen geeignet. Je nach Art des Untergrunds und der zu erzielenden Befestigungswerte kommen auch unterschiedliche Arten von Befestigungselementen zum Einsatz. Bei dem sequentiellen Verfahren wird zunächst mit einer Bohreinrichtung im Untergrund eine Aufnahmebohrung erstellt. Die Bohreinrichtung besteht dabei aus einem Metall-, Gesteins- oder auch Holzbohrer, der von einem Handgerät mit motorischem Drehantrieb und gegebenenfalls axialer Schlagunterstützung angetrieben wird. Nach der Erstellung der Aufnahmebohrung wird ein Befestigungselement - üblicherweise ein Dübel - in die Aufnahmebohrung eingesetzt und in den meisten Fällen durch Eindrehen einer Schraube oder durch Einschlagen eines Doms aufgespreizt und in der Aufnahmebohrung verankert. Als mechanische Befestigungselemente können auch Kunststoff- oder Metalldome mit einem Kopf eingesetzt werden, die mit einem Hammer in die vorgebohrte Aufnahmebohrung eingetrieben werden. Der Haltemechanismus beruht meist auf Reibschluss, in Hohllochziegeln manchmal auch auf Formschluss.

Bei der Direkt-Montagetechnik wird ein spezielles Befestigungselement mit Hilfe eines pulverkraftbetriebenen Setzgerätes direkt in den Untergrund eingetrieben. Bei dieser Befestigungsmethode entfällt das separate Erstellen einer Aufnahmebohrung für das Befestigungselement. Die Direkt-Montagetechnik ist schnell und führt zu Befestigungen mit hohen Haltewerten. Allerdings ist die bekannte Direkt-Montagetechnik nur für mehr oder weniger duktile Untergründe, wie beispielsweise Stahl, Kalksandstein, Beton oder ggf. Holz, geeignet.

Weniger feste oder spröde Untergründe, wie beispielsweise Ziegelmauerwerk, werden bei der bekannten Direkt-Montagetechnik mittels pulverkraftbetriebenen Setzgeräten sehr stark beansprucht und oft sogar beschädigt und führen zu keinen zuverlässigen Befestigungen. Daher wird für Verankerungen in diesen Untergründen im wesentlichen nur das sequentielle Befestigungsverfahren eingesetzt Dieses schont den Untergrund und führt zu zuverlässigen Befestigungen mit den gewünschten Haltewerten. Allerdings muss dafür ein deutlich grösserer Zeitaufwand je Befestigungspunkt in Kauf genommen werden. Ausserdem sind meist separate Geräte für die Erstellung der Aufnahmebohrungen und für die Verankerung der Befestigungselemente in den Aufnahmebohrungen erforderlich, beispielsweise ein Bohrgerät mit Bohreinrichtung zum Bohren der Aufnahmebohrung und ein Schraubgerät zum Eindrehen einer Befestigungsschraube in einen Dübel, wobei der Dübel durch Aufspreizen verankert wird.

Aufgabe der vorliegenden Erfindung ist es daher, die Voraussetzungen zu schaffen, damit auch in spröden Untergründen, beispielsweise in Ziegelmauerwerk, schnell und zuverlässig ein Befestigungselement verankert werden kann. Insbesondere soll durch die Erfindung ein Bohrwerkzeug geschaffen werden, welches in Verbindung mit einem neuartigen Befestigungselement und einer neuartigen Befestigungstechnik zum Einsatz kommt. Dabei soll auf die sequentielle Abfolge des Erstellens einer Aufnahmebohrung und des nachfolgenden Einsetzens eines Befestigungselements in die Aufnahmebohrung und schliesslich des Verspreizens des Befestigungselements verzichtet werden können. Die Notwendigkeit, mehrere verschiedene Geräte für die Erstellung der Aufnahmebohrung und für die nachfolgende Verankerung des Befestigungselements mitzuführen, soll entfallen können. Der Untergrund soll geschont werden und es sollen Befestigungen mit den geforderten Haltewerten erzielt werden können.

Die Lösung der vorstehenden Aufgaben besteht in einem Bohrwerkzeug, welches die im Patentanspruch 1 angeführten Merkmale aufweist. Insbesondere wird durch die Erfindung ein Bohrwerkzeug mit einem länglichen Schaft geschaffen, dessen eines, rückwärtiges Ende als Einsteckende ausgebildet ist und der am gegenüberliegenden Vorderende einen mit Bohrschneiden ausgestatteten Bohrkopf aufweist. Am Schaft ist eine vorzugsweise ringförmige Schulter angeordnet, die in Richtung dem Bohrkopf zugewandt ist. Der Bohrkopf weist Zentrierschneiden auf, die von einer im wesentlichen in Verlängerung der Schaftachse angeordneten, vorlaufenden Zentrierspitze zum Umfang des Bohrkopfs hin zurücktreten. Neben den Zentrierschneiden ist am Bohrkopf wenigstens eine Nebenschneide vorgesehen, deren senkrecht zur Schaftachse verlaufende Erstreckung den Umfang des Schafts überragt, wobei der den Schaftumfang überragende Anteil der Erstreckung der Nebenschneide etwa 10 % bis 100 % ihrer Gesamterstreckung ausmacht.

Durch das erfindungsgemässe Bohrwerkzeug sind die Voraussetzungen dafür geschaffen, ein neuartiges Befestigungselement, das einen rohrförmig ausgebildeten, metallischen Schaft mit einer axialen Durchgangsbohrung und einem sich über die gesamte Schaftlänge erstreckenden, axialen Schlitz im Mantel des Schafts, sowie Lastangriffsmittel am der Setzrichtung abgewandten rückwärtigen Endabschnitt des Schafts aufweist, in einem Direktbefestigungsverfahren im Untergrund zu verankern. Aufgrund der erfindungsgemässen Konstruktion des Bohrwerkzeugs wird in einem Arbeitsgang mit dem Bohrwerkzeug eine Aufnahmebohrung erstellt und wird das Befestigungselement synchron durch axiale Schläge in den Untergrund eingetrieben. Der Bohrkopf des Bohrwerkzeugs ist derart gestaltet, dass das Befestigungselement auf den Schaft aufgeschoben werden kann, bis sein Kragen an der Anschlagschulter ansteht. Der Bohrkopf überragt dabei das vordere Ende des Befestigungselements. Die Anschlagschulter dient der Übertragung von axialen Schlägen auf das Befestigungselement, durch die dieses synchron mit der Erstellung der Aufnahmebohrung in den Untergrund eingetrieben wird. Im gesetzten Zustand des Befestigungselements, mit im Extremfall vollständig geschlossenem axialen Schlitz, kann das Bohrwerkzeug wieder aus dem Befestigungselement herausgezogen werden, da der Hüllkreis des Bohrkopfes kleiner ist als der Innendurchmesser des auf Block geschlossenen rohrförmigen Befestigungselements. Die Zentrierspitze stützt das Bohrwerkzeug gegen ein Abdriften aus der Achsmitte, wenn die wenigstens eine asymmetrisch angeordnete Nebenschneide in Eingriff mit dem Untergrund ist.

Es erweist sich von Vorteil, wenn zwei Zentrierschneiden vorgesehen sind, die miteinander einen Winkel von etwa 60° bis etwa 180° einschliessen, und eine Nebenschneide angeordnet ist, die ausgehend von der Zentrierspitze zur ausserhalb des Schaftumfangs verlaufenden Seitenwandung des Bohrkopfes hin zurücktritt, wobei in der axialen Draufsicht des Bohrkopfes die Nebenschneide mit der benachbarten Zentrierschneide jeweils einen stumpfen Winkel einschliesst. Bei der gewählten Geometrie halten sich im Betrieb die Kräfte an den Schneidkanten die Waage und verbessern die Abstützung des Bohrwerkzeugs in der Aufnahmebohrung. Aus Gründen einer symmetrischen Kraftverteilung ist es zweckmässig, wenn sich die Nebenschneide parallel, vorzugsweise in Verlängerung, zur Winkelhalbierenden der Zentrierschneiden erstreckt.

Indem das ausserhalb des Schaftumfangs liegende Ende der Nebenschneide einen grösseren Abstand von der Zentrierspitze aufweist als die im Bereich des Schaftumfangs liegenden Enden der Zentrierschneiden wird die Asymmetrie des Bohrkopfs noch weiter betont. Die Nebenschneide ist länger als die Zentrierschneiden und besorgt den hauptsächlichen Materialabtrag.

Für den Ausgleich der Kräfte an den Schneidkanten der Zentrierschneiden und der Nebenschneide erweist sich eine Anordung von Vorteil, bei der in Seitenansicht die Nebenschneide und die Zentrierschneide an der Zentrierspitze einen Winkel von etwa 30° bis etwa 120° einschliessen.

In einer sehr zweckmässigen, alternativen Variante des Bohrwerkzeugs ist der dem Schaftumfang radial am nächsten liegende Bereich der Nebenschneide gegenüber der Zentrierspitze um wenigstens 2,5 mm zurückgesetzt. In diesem Fall erstreckt sich die Nebenschneide nicht bis zur Zentrierspitze, sondern sie ist gegenüber dieser zurückversetzt und seitlich des Schaftumfangs angeordnet Die Zentrierschneiden mit der Zentrierspitze besitzen eine sehr ausgeprägte Zentrierbohrerfunktion. Sie dienen allein der Abstützung des Bohrwerkzeugs gegen ein seitliches Abdriften aus der Achsmitte, wenn die asymmetrisch angeordnete Nebenschneide in Eingriff mit dem Untergrund ist. Die Nebenschneide bohrt schlagend und schabend um die Zentrierbohrung herum eine Aufnahmebohrung mit dem gewünschten Durchmesser, der grösser ist als der Hüllkreisdurchmesser des Bohrkopfs und derart bemessen ist, dass das rohrförmige Befestigungselement in der Aufnahmebohrung verspannt wird. Die resultierende Haltekraft des Befestigungselements ist ein Ergebnis der Anpresskraft an die Bohrungswandung infolge des Verspannens und des Haftreibungsbeiwertes.

Der Bohrkopf kann mit einer oder mit mehreren Nebenschneiden ausgestattet sein. Für Anwendungen auch in härteren Untergründen, beispielsweise in Betonuntergründen mit harten Zuschlagsstoffen, erweisen sich zwei Nebenschneiden von Vorteil, die miteinander einen Winkel von 30° bis 50°, vorzugsweise etwa 40° einschliessen.

Für die Unterstützung des Bohrmehltransports ist jeder Nebenschneide eine Bohrmehlabfuhrnut zugeordnet ist, die bezogen auf die Drehrichtung des Bohrkopfs der Nebenschneide nachgelagert ist und axial in der Seitenwandung des Bohrkopfs verläuft.

Um den Bohrmehlabtransport weiter zu verbessern, ist der Schaft ellipsen- bzw. linsenförmig ausgebildet. Durch die elliptische bzw. linsenförmige Gestalt des Schafts des Bohrwerkzeugs wird das abgebaute Bohrklein bzw. Bohrmehl radial nach aussen verdrängt und durch die entstehende Verdrängungswirkung nach rückwärts transportiert. Abfuhmuten, die im Schaft eingeprägt sein können, unterstützen den Bohrmehltransport noch weiter. Die elliptische bzw. linsenförmige Schaftgeometrie verleiht dem Bohrwerkzeug eine hohe Drehmomentstabilität und gewährleistet zugleich eine ausreichende Biegeweichheit, um das Bohrwerkzeug auch bei schräg gesetzten Befestigungselementen, bei denen manchmal eine leichte Biegung in Achsrichtung auftreten kann, problemlos herausziehen zu können. Besonders gute Verhältnisse bezüglich der Drehmomentstabilität einerseits und der Biegeweichheit des Schafts andererseits ergeben sich bei Verhältnissen des grössten Durchmessers des Schafts und des senkrecht dazu verlaufenden kleinsten Durchmessers des Schafts, die von etwa 1,8 : 1 bis etwa 1,4 : 1 betragen.

Der Schaft ist zweckmässigerweise zweiteilig ausgebildet und umfasst einen durchmessergrösseren rückwärtigen Abschnitt mit dem Einsteckende und einen dünneren vorderen Schaftabschnitt. Der Bohrkopf ist am freien Vorderende des vorderen Schaftabschnitts befestigt, der vorzugsweise eine elliptische bzw. linsenförmige Geometrie aufweist. Der vordere Schaftabschnitt ist lösbar mit dem rückwärtigen Abschnitt verbunden. Beispielsweise mündet an der dem Einsteckende gegenüberliegenden Stirnwand des rückwärtigen Abschnitts eine Einsteckbohrung, in die der dünnere vordere Schaftabschnitt einsteckbar ist Verriegelungselemente verhindern das Herausfallen des eingesteckten vorderen Schaftabschnitts. Die dem dünneren Schaftabschnitt zugewandte Stirnwand des rückwärtigen Abschnitts bildet zugleich die Anschlagschulter für ein aufgeschobenes Befestigungselement, damit vom Handgerät erzeugte axiale Schläge auf das Befestigungselement übertragbar sind. Durch die lösbare Halterung des vorderen, dünneren Schaftabschnitts muss im Fall eines übermässigen Verschleisses des Bohrkopfs nicht das gesamte Bohrwerkzeug ersetzt werden. Es genügt, den vorderen Schaftabschnitt mit dem Bohrkopf auszutauschen. Analoges gilt für den Fall, dass der mit dem Einsteckende versehene rückwärtige Abschnitt ersetzt werden muss. Auch in diesem Fall kann der noch unversehrte Teil des Bohrwerkzeugs weiterverwendet werden.

Als Material für den Bohrkopf kommt vorzugsweise Hartmetall zum Einsatz. Dadurch weist das Bohrwerkzeug eine hohe Verschleissfestigkeit auf und es besitzt eine ausreichende Härte, um auch in festen Untergründen Aufnahmebohrungen erstellen zu können. Die Befestigung des Bohrkopfs am Schaft erfolgt auf an sich bekannte Weise, beispielsweise durch Schweissen oder Löten.

Im folgenden wird die Erfindung anhand von Ausführungsbeispielen unter Bezugnahme auf die schematischen Zeichnungen näher erläutert. Es zeigen:
- Fig. 1: eine perspektivische Darstellung eines erfindungsgemässen Bohrwerkzeugs;
- Fig. 2: einen Schnitt durch den Schaft des Bohrwerkzeugs gemäss Schnittlinie II-II in Fig. 1;
- Fig. 3: eine Seitenansicht eines ersten Ausführungsbeispiels eines Bohrkopfs;
- Fig. 4: eine Draufsicht des Bohrkopfs gemäss Fig. 3;
- Fig. 5: eine perspektivische Darstellung eines zweiten Ausführungsbeispiels des Bohrkopfs;
- Fig. 6: eine perspektivische Darstellung eines dritten Ausführungsbeispiels des Bohrkopfs;
- Fig. 7 und Fig. 8: zwei Draufsichten des Bohrkopfs gemäss Fig. 4 mit angedeutetem Befestigungselement; und
- Fig. 9: eine Darstellung einer Montageeinheit zur Direktbefestigung eines Befestigungselements mit Hilfe eines erfindungsgemässen Bohrwerkzeugs.

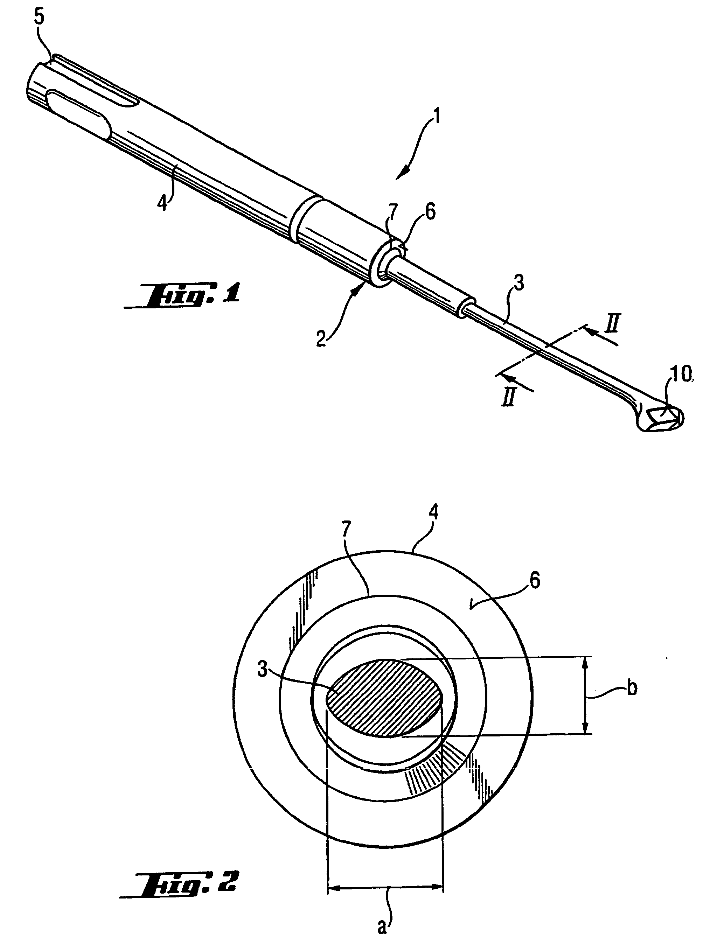

Ein erfindungsgemäss ausgebildetes Bohrwerkzeug ist in Fig. 1 gesamthaft mit dem Bezugszeichen 1 versehen. Es umfasst einen Schaft 2, der sich im wesentlichen aus einem rückwärtigen Abschnitt 4 und einem Vorderabschnitt 3 zusammensetzt. Der rückwärtige Abschnitt 4 weist einen grösseren Durchmesser auf als der Vorderabschnitt 3. Im Übergangsbereich vom rückwärtigen Abschnitt 4 zum Vorderabschnitt ist eine ringförmige Anschlagschulter 6 vorgesehen, die vom Einsteckende 5 wegweist und dem Vorderabschnitt 3 des Schafts 2 zugewandt ist. Der dünnere Vorderabschnitt 3 und der rückwärtige Abschnitt 4 können, beispielsweise durch Reibschweissen, einstückig miteinander verbunden sein. Mit Vorteil sind sie aber lösbar miteinander verbunden, indem das Ende des Vorderabschnitts 3 in eine Bohrung 7 in der Stirnfläche des rückwärtigen Abschnitts 4 des Schafts 2 eingesetzt ist und dort über nicht näher dargestellte Arretiermittel fixiert ist. Die Arretiermittel können beispielsweise eine Arretierschraube oder ähnliche an sich bekannte Verriegelungsmechanismen sein. An seinem dem Einsteckende gegenüberliegenden Vorderende weist der Schaft einen Bohrkopf 10 auf, der in der Folge noch näher beschrieben wird.

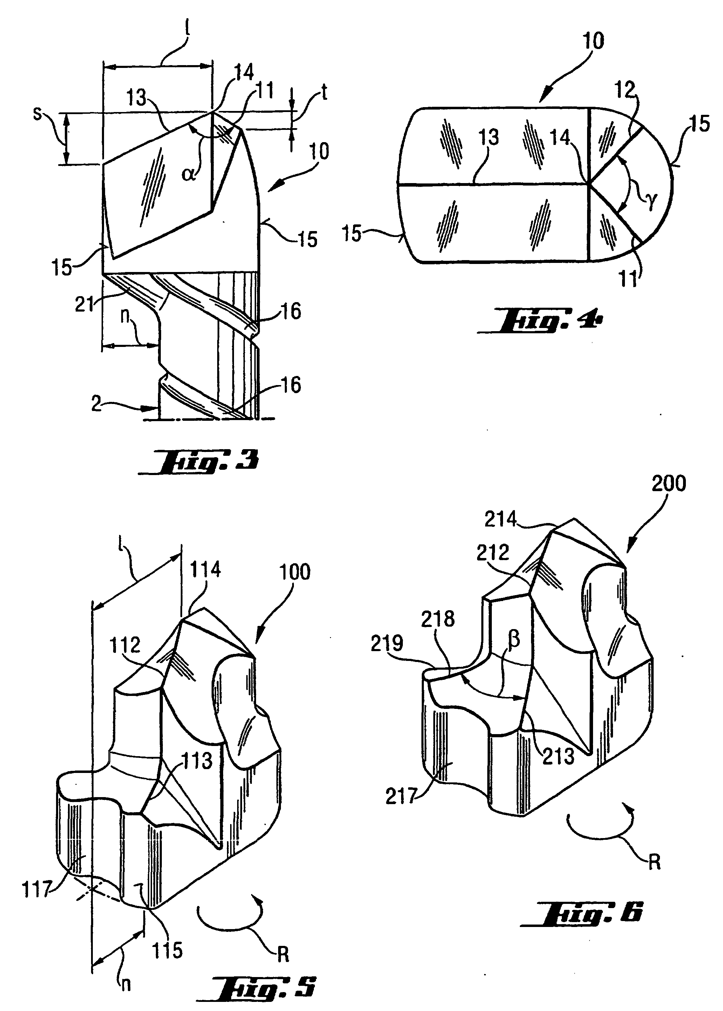

Wie aus der Schnittdarstellung der Fig. 2 ersichtlich, weist der dünnere Vorderabschnitt 3 des Schafts eine elliptische bzw. linsenförmige Geometrie auf. Die Hauptachse a und die senkrecht dazu verlaufende Nebenachse b stehen in einem Verhältnis zueinander, das von etwa 1,8 : 1 bis etwa 1,4 : 1 betragen kann. Diese Schaftgeometrie kann sich über den gesamten Vorderabschnitt 3 erstrecken, sie kann auch, wie in Fig. 1 angedeutet, nur einen Teilbereich des Vorderabschnitts 3 umfassen. Dadurch ergeben sich die in Fig. 2 kreisförmig bzw. ellipsenförmig angedeuteten Übergangsbereiche. Mit dem Bezugszeichen 7 ist die Bohrung in der Stirnseite des rückwärtigen Abschnitts bezeichnet. Die Stirnseite bildet zugleich die Anschlagschulter 6.

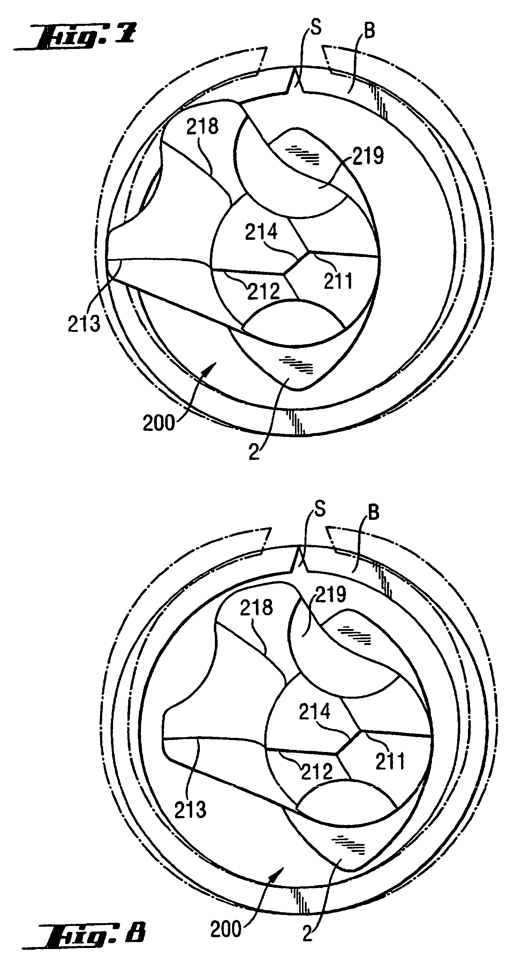

In Fig. 3 ist ein erstes Ausführungsbeispiel des Bohrkopfs gesamthaft mit dem Bezugszeichen 10 versehen. Der Bohrkopf 10 ist mit dem Vorderende des Schafts 2 verbunden, beispielsweise angeschweisst oder angelötet. Er weist Zentrierschneiden 11 und wenigstens eine Nebenschneide 13 auf, die sich von einer Zentrierspitze 14 zu den Seitenflächen 15 des Bohrkopfs 10 erstrecken und dabei in ihrer Höhe gegenüber der Zentrierspitze 14 zurücktreten. Die Nebenschneide 13 erstreckt sich exzentrisch zu der Achse des Schafts 2 und überragt dessen Umfang um eine Strecke n. Der den Umfang überragende Anteil n der Erstreckung der Nebenschneide 13 beträgt etwa 10 % bis zu 100 % ihrer Gesamterstreckung I. Die Nebenschneide 13 endet an der Seitenwandung 15 in einem Punkt, dessen Abstand s von der Zentrierspitze 14 grösser ist als der Abstand t des korrespondierenden Endpunktes der Zentrierschneide 11. Die Zentrierschneiden 11 und die Nebenschneide 13 schliessen an der Zentrierspitze einen Winkel α von etwa 30° bis etwa 120° ein. Während der Bohrkopf 10 derart auf dem Schaft 2 befestigt sein kann, dass die Unterseite seines die Nebenschneide tragenden Abschnitts den Schaft frei überragt, erweist es sich von Vorteil, wenn der Schaft 2 an seinem Vorderende eine seitliche Erweiterung 21 aufweist, die als Unterstützung für den sonst frei überstehenden Abschnitt des Bohrkopfs 10 dient und die Verbindungsfläche zwischen Bohrkopf 10 und Schaft 2 vergrössert. Am Schaft sind Abfuhmuten 16 angedeutet, die sich vom Bohrkopf 10 wendelförmig nach rückwärts erstrecken.

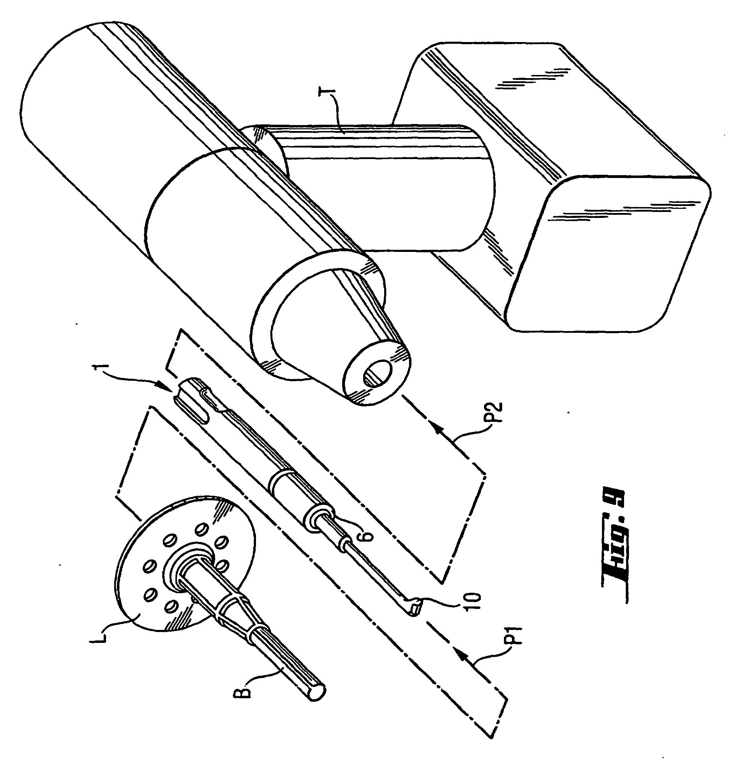

Fig. 4 zeigt eine Draufsicht auf den Bohrkopf 10 gemäss Fig. 3. Insbesondere ist ersichtlich, dass der Bohrkopf 10 zwei Zentrierschneiden 11, 12 aufweist, die ausgehend von der Zentrierspitze 14 zur Seitenfläche 15 des Bohrkopfs 10 verlaufen. Die beiden Zentrierschneiden 11, 12, schliessen an der Zentrierspitze 14 einen Winkel γ ein, der von etwa 60° bis 180° betragen kann. Die längere Nebenschneide 13 verläuft in Verlängerung der der Winkelhalbierenden des von den Zentrierschneiden 11, 12 eingeschlossenen Winkels γ. Sie schliesst mit den benachbarten Zentrierschneiden 11 bzw. 12 jeweils einen stumpfen Winkel ein.

Fig. 5 zeigt ein zweites Ausführungsbeispiel des Bohrkopfs 100 eines erfindungsgemäss ausgebildeten Bohrwerkzeugs. Bei dem dargestellten Ausführungsbeispiel sind die Zentrierschneiden mit 111 bzw. 112 bezeichnet. Der Bohrkopf 100 weist eine Nebenschneide 113 auf, deren Erstreckung n, l zu 100 % ausserhalb des Umfangs des nicht näher dargestellten Schafts des Bohrwerkzeugs verläuft. Der dem Schaftumfang radial am nächsten liegende Bereich der Nebenschneide 113 ist gegenüber der Zentrierspitze 114 um wenigstens 2,5 mm zurückgesetzt. Wie aus der Darstellung ersichtlich, ist der Nebenschneide 113 eine Bohrmehlabfuhrnut 117 zugeordnet, die derart im wesentlichen axial verlaufend in der Seitenfläche 115 des Bohrkopfs 100 angeordnet ist, dass sie in Bezug auf die Drehrichtung R der Nebenschneide 113 nachgelagert ist. Der der Nebenschneide 113 vorgelagerte Freiraum am Bohrkopf 100 ermöglicht bereits einen ausreichenden Bohrmehltransport. Im Fall eines aussergewöhnlich hohen Bohrmehlanfalls unterstützt die nachgelagerte Bohrmehlabfuhrnut 117 den Bohrmehltransport noch zusätzlich.

Das in Fig. 6 gesamthaft mit 200 bezeichnete weitere Ausführungsbeispiel eines Bohrkopfs entspricht weitgehend dem in Fig. 5 dargestellten Ausführungsbeispiel.

Einander entsprechende Merkmale weisen demgemäss die gleichen beiden Endziffern auf, denen zur Unterscheidung der Ausführungsbeispiele eine "2" vorangestellt ist. Der wesentliche Unterschied der beiden Ausführungsbeispiele besteht in der Anordnung von zwei Nebenschneiden 213, 218, die miteinander einen Winkel β einschliessen, der von etwa 30° bis etwa 50°, vorzugsweise etwa 40°, betragen kann. Den Nebenschneiden 213, 218 sind bezogen auf die Drehrichtung des Bohrkopfs 200 jeweils Bohrmehlabfuhmuten 217, 219 nachgelagert, die den Bohrmehltransport noch weiter verbessern.

In Fig. 7 und Fig. 8 ist eine Draufsicht auf den Bohrkopf 200 des Ausführungsbeispiels gemäss Fig. 6 dargestellt. Die auf den Bohrkopf 200 gerichteten Bezugszeichen entsprechen denen aus Fig. 6. Mit dem Bezugszeichen B ist ein rohrförmiges Befestigungselement angedeutet, das einen über seine gesamte Länge verlaufenden axialen Schlitz S aufweist. Das Befestigungselement B ist auf das Bohrwerkzeug aufgesteckt. Der Bohrkopf 200 überragt das Vorderende des Befestigungselements. Das Befestigungselement B ist in zwei Stellungen gezeichnet. Dabei bedeutet die strichlierte Zeichnung die Ausgangssituation, in der der Schlitz S geöffnet ist. Die ausgezogenen Linien zeigen das Befestigungselement B im gesetzten Zustand, in dem es in der Aufnahmebohrung radial verspannt ist und im Extremfall der Schlitz S auf Block geschlossen ist. Der Bohrkopf 200 des Bohrwerkzeugs befindet sich noch in Bohrstellung, wobei die Zentrierspitze 214 in Verlängerung der Achse des Bohrwerkzeugs und des Befestigungselements B angeordnet ist und die Zentrierschneiden 211, 212 verhindern, dass das Bohrwerkzeug seitlich abdriftet, wenn die Nebenschneiden 213, 218 in abbauendem Eingriff mit dem Untergrund sind. Der eine ellipsen- bzw. linsenförmige Geometrie aufweisende Schaft ist angedeutet und mit dem Bezugszeichen 2 versehen. Es ist unmittelbar ersichtlich, dass die Nebenschneiden eine Aufnahmebohrung mit einem Durchmesser erstellen, der grösser ist als der Durchmesser des Hüllkreises des Bohrkopfs 200. In der zentrierten Stellung kann das Bohrwerkzeug nicht aus dem gesetzten Befestigungselement B herausgezogen werden. Dazu muss das Bohrwerkzeug erst seitlich verschoben werden, bis sich der Bohrkopf 200 mit seinem gesamten Hüllkreis innerhalb des Innendurchmessers des Befestigungselements B befindet, wie in Fig. 8 dargestellt. In dieser Position kann das Bohrwerkzeug sehr einfach aus dem gesetzten Befestigungselement B herausgezogen werden.

In Fig. 9 ist eine Montageeinheit dargestellt, die es erlaubt, beispielsweise eine Isolationsplatte nach dem erfindungsgemässen Direkt-Montageverfahren an einer Ziegelmauerwand zu befestigen. Die Montageeinheit umfasst ein rohrförmiges Befestigungselement B, das mit einem pilzförmigen Lastangriffsmittel L zur Fixierung von Isolationsplatten ausgestattet ist, ein erfindungsgemässes Bohrwerkzeug 1 mit einer Anschlagschulter 6 und einem Bohrkopf 10 mit exzentrischer Nebenschneide und ein Handgerät T. Bei dem Handgerät T handelt es sich beispielsweise um ein Drehbohrgerät mit Axialschlagunterstützung. Zur Vorbereitung des Montagevorgangs wird zunächst das Bohrwerkzeug 1 mit seinem Einsteckende in die Werkzeugaufnahme des Handgeräts T eingesteckt. Danach wird das Befestigungselement B auf das Bohrwerkzeug 1 aufgeschoben, bis der Bohrkopf 10 aus dem Vorderende des rohrförmigen Befestigungselements B ragt. Die Pfeile P1 und P2 verdeutlichen in der Darstellung die Montage des Bohrwerkzeugs 1 und des Befestigungselements B. Die derart vorbereitete Montageeinheit, bestehend aus dem Handgerät T, dem Bohrwerkzeug 1 und dem Befestigungselement B wird durch das Material der Isolationsplatte gegen den Untergrund gepresst. Bei Betätigung des Handgeräts T beginnt das Bohrwerkzeug 1 im Untergrund eine Aufnahmebohrung zu erstellen. Sobald das Vorderende des rohrförmigen Befestigungselements B den Untergrund berührt, folgt dieses, durch axiale Schläge unterstützt, dem Bohrkopf 10 in den Untergrund. Dabei werden die vom Handgerät T erzeugten axialen Schläge über die Anschlagschulter 6 auf das rückwärtige Ende des rohrförmigen Befestigungselements B übertragen, das sich im dargestellten Beispiel innerhalb des pilzförmigen Lastangriffsmittels L abstützt Auf diese Weise wird kontinuierlich gebohrt und gleichzeitig das Befestigungselement B schlagend in den Untergrund eingetrieben. Das längsgeschlitzte rohrförmige Befestigungselement B weist gegenüber der erstellten Aufnahmebohrung ein Übermass auf und wird daher beim Eintreiben radial zusammengepresst. Das hohle Befestigungselement B bildet für das Bohrwerkzeug 1 eine radiale Führung. Die Zentrierschneiden am Bohrkopf verhindern, dass der Bohrkopf 10 seitlich abdriftet, wenn die wenigstens eine exzentrische Nebenschneide in Eingriff mit dem Untergrund kommt. Das axial eingetriebene rohrförmige Befestigungselement B zieht das Lastangriffsmittel L in das Material der Isolationsplatte, bis das grossflächige Kopfteil des Lastangriffsmittels L, vorzugsweise bündig, an der Oberfläche der Platte anliegt.

## Patentansprüche

1. Bohrwerkzeug mit einem länglichen Schaft (2), dessen eines, rückwärtiges Ende als Einsteckende (5) ausgebildet ist und der am gegenüberliegenden Vorderende einen mit Bohrschneiden ausgestatten Bohrkopf (10) aufweist, an dem wenigstens eine Nebenschneide (13) vorgesehen ist, deren senkrecht zur Schaftachse verlaufende Erstreckung den Umfang des Schafts (2) überragt, **dadurch gekennzeichnet, dass** am Schaft (2) eine vorzugsweise ringförmige Schulter (6) angeordnet ist, die dem Bohrkopf (10) zugewandt ist, dass der Bohrkopf (10) Zentrierschneiden (11, 12) aufweist, die von einer im wesentlichen in Verlängerung der Schaftachse angeordneten, vorlaufenden Zentrierspitze (14) zum Umfang des Bohrkopfs hin zurücktreten, und dass der den Schaftumfang überragende Anteil (n) der Erstreckung der Nebenschneide (13) etwa 10 % bis 100 % ihrer Gesamterstreckung (l) ausmacht.

2. Bohrwerkzeug nach Anspruch 1, **dadurch gekennzeichnet, dass** zwei Zentrierschneiden (11, 12) vorgesehen sind, die miteinander einen Winkel (γ) von etwa 60° bis etwa 180° einschliessen, und dass eine Nebenschneide (13) angeordnet ist, die ausgehend von der Zentrierspitze (14) zur ausserhalb des Schaftumfangs verlaufenden Seitenfläche (15) des Bohrkopfs (10) hin gegenüber der Zentrierspitze (14) zurücktritt, wobei in der axialen Draufsicht des Bohrkopfes (10) die Nebenschneide (13) sich parallel, vorzugsweise in Verlängerung, zur Winkelhalbierenden der Zentrierschneiden (11, 12) erstreckt und mit der benachbarten Zentrierschneide (11, 12) jeweils einen stumpfen Winkel einschliesst.

3. Bohrwerkzeug nach Anspruch 2, **dadurch gekennzeichnet, dass** das ausserhalb des Schaftumfangs liegende Ende der Nebenschneide (13) einen grösseren Abstand (s) von der Zentrierspitze (14) aufweist als die im Bereich des Schaftumfangs liegenden Enden der Zentrierschneiden (11, 12).

4. Bohrwerkzeug nach Anspruch 2 oder 3, **dadurch gekennzeichnet, dass** in Seitenansicht die Nebenschneide (13) und die Zentrierschneide (11) an der Zentrierspitze (14) einen Winkel (α) von etwa 30° bis etwa 180° einschliessen.

5. Bohrwerkzeug nach Anspruch 1, **dadurch gekennzeichnet, dass** der dem Schaftumfang radial am nächsten liegende Bereich der Nebenschneide (113; 213, 218) gegenüber der Zentrierspitze (114; 214) um wenigstens 2,5 mm zurückgesetzt ist.

6. Bohrwerkzeug nach Anspruch 5, **dadurch gekennzeichnet, dass** zwei Nebenschneiden (213, 218) vorgesehen sind, die miteinander einen Winkel (β) von 30° bis 50°, vorzugsweise etwa 40° einschliessen.

7. Bohrwerkzeug nach Anspruch 5 oder 6, **dadurch gekennzeichnet, dass** jeder Nebenschneide (113; 213, 218) eine Bohrmehlabfuhmut (117; 217, 219) zugeordnet ist, die bezogen auf die Drehrichtung (R) der Nebenschneide (113; 213, 218) nachgelagert ist und im wesentlichen axial in der Seitenwandung (115; 215) des Bohrkopfs (100, 200) verläuft.

8. Bohrwerkzeug nach einem der vorangehenden Ansprüche, **dadurch gekennzeichnet, dass** der Schaft (2) ellipsen- bzw. linsenförmig ausgebildet ist, wobei der grösste Durchmesser (a) des Schafts (2) und der senkrecht dazu verlaufende kleinste Durchmesser (b) des Schafts (2) im Verhältnis von etwa 1,8 : 1 bis etwa 1,4 : 1 stehen.

9. Bohrwerkzeug nach einem der vorangehenden Ansprüche, **dadurch gekennzeichnet, dass** am Schaft (2) Abfuhmuten (16) für Bohrmehl vorgesehen sind, die sich wendelförmig zum rückwärtigen Ende des Schafts (2) erstrecken.

10. Bohrwerkzeug nach einem der vorangehenden Ansprüche, **dadurch gekennzeichnet, dass** der Schaft (2) zweigeteilt ist und einen durchmessergrösseren rückwärtigen Abschnitt (4) mit dem Einsteckende (5) und einen dünneren vorderen Schaftabschnitt (3) aufweist, an dessen freiem Vorderende der Bohrkopf (10) befestigt ist, wobei der vordere Schaftabschnitt (3) lösbar mit dem rückwärtigen Abschnitt (4) verbunden ist und die Schulter (6) am dem Einsteckende (5) abgewandten Vorderende des rückwärtigen Abschnitts (4) angeordnet ist.

## Claims

1. A drilling tool having a long shaft (2), the rear end of which is formed as a shank (5) and which, at the opposite front end, has a drill head (10) fitted with cutting edges and on said drill head (10) at least one secondary cutting edge (13) is provided whose extension, running perpendicular to the axis of the shaft (2), projects beyond the circumference of the shaft (2), **characterized in that** a preferably annular shoulder (6) is disposed on the shaft (2) in such a way as to face the drill head (10), **in that** the drill head (10) has centring cutting edges (11, 12), which extend backwards from a leading centre point (14), which is disposed substantially in the continuation of the axis of the shaft (2), towards the circumference of the drill head, **and in that** the portion (n) of the extension of the secondary cutting edge (13) which projects beyond the circumference of the shaft (2) amounts to between approximately 10% and 100% of its overall extension (I).

2. A drilling tool according to Claim 1, **characterized in that** two centring cutting edges (11, 12) are provided which together form an angle (γ) of approximately 60° to approximately 180°, and **in that** a secondary cutting edge (13) is provided which, proceeding from the centre point (14), extends backwards, relative to the centre point (14), towards the side face (15) of the drill head (10), which face (15) lies outside the circumference of the shaft, the secondary cutting edge (13), in the axial plan view of the drill head (10), extending parallel to the angle bisector of the centring cutting edges (11, 12), and preferably in continuation of said angle bisector, and forming an obtuse angle with each adjacent centring cutting edge (11, 12).

3. A drilling tool according to Claim 2, **characterized in that** the end of the secondary cutting edge (13) lying outside the circumference of the shaft (2) is a greater distance (s) from the centre point (14) than the ends of the centring cutting edges (11, 12) lying in the region of the circumference of the shaft.

4. A drilling tool according to Claim 2 or 3, **characterized in that**, when seen from the side, the secondary cutting edge (13) and the centring cutting edge (11) form an angle (α) of about 30° to about 180° at the centre point (14).

5. A drilling tool according to Claim 1, **characterized in that** the area of the secondary cutting edge (113; 213, 218) that lies radially nearest to the circumference of the shaft is set back relative to the centre point (114; 214) by at least 2.5 mm.

6. A drilling tool according to Claim 5, **characterized in that** two secondary cutting edges (213, 218) are provided, which together form an angle (β) of 30° to 50°, and preferably of about 40°.

7. A drilling tool according to Claim 5 or 6, **characterized in that** a flute (117; 217, 219) for the removal of drilling dust is associated with each secondary cutting edge (113; 213, 218) so as to trail behind it relative to the direction of rotation (R) of the secondary cutting edge (113; 213, 218), each flute extending in substantially axial direction in the side wall (115; 215) of the drill head (100, 200).

8. A drilling tool, according to one of the preceding claims, **characterized in that** the shaft (2) is elliptical or lenticular, the ratio of the largest diameter (a) of the shaft (2) to the smallest diameter (b) of the shaft (2) running perpendicular thereto being approximately 1.8: 1 to approximately 1.4: 1.

9. A drilling tool according to one of the preceding claims, **characterized in that** flutes (16) for the removal of drilling dust are provided on the shaft (2), said flutes (16) extending in the form of a helix to the rear end of the shaft (2).

10. A drilling tool according to one of the preceding claims, **characterized in that** the shaft (2) is in two parts and has one larger-diameter rear portion (4) with the shank (5), and one thinner front portion (3), on the free front end of which the drill head (10) is fixed, the front portion (3) of the shaft being detachably connected to the rear portion (4) and the shoulder (6) being provided on the front end of the rear portion (4) facing away from the shank (5).

## Revendications

1. Outil de forage avec une tige allongée (2) dont l'une des extrémités située à l'arrière est conformée en extrémité insérable (5) et qui comporte, à l'extrémité avant opposée, une tête de forage (10) qui est garnie de taillants de forage et sur laquelle est prévu au moins un taillant secondaire (13) dont l'extension orientée perpendiculairement à l'axe de la tige dépasse de la circonférence de la tige (2), **caractérisé en ce que** sur la tige (2) est disposé un épaulement de préférence annulaire (6) qui est tourné vers la tête de forage (10), **en ce que** la tête de forage (10) comporte des taillants de centrage (11, 12) qui s'étendent en retrait d'une pointe de centrage (14), située à l'avant et disposée sensiblement dans le prolongement de l'axe de la tige, vers un taillant secondaire (13), et **en ce que** la fraction (n) de l'extension du taillant secondaire (13) dépassant de la circonférence de la tige correspond à environ 10 % à 100 % de l'extension totale (1) de celui-ci.

2. Outil de forage selon la revendication 1, **caractérisé en ce qu'**il est prévu deux taillants de centrage (11, 12) qui forment entre eux un angle (γ) d'environ 60° à environ 180°, et **en ce qu'**il est prévu un taillant secondaire (13) qui, par rapport à la pointe de centrage (14), s'étend en retrait de la pointe de centrage (14) à la surface latérale (15) de la tête de forage (10) s'étendant à l'extérieur de la circonférence de la tige, dans la vue axiale de dessus de la tête de forage (10) le taillant secondaire (13) s'étendant parallèlement à la bissectrice des taillants de centrage (11, 12), de préférence dans le prolongement de celle-ci, et formant avec chaque taillant central voisin (11, 12) un angle obtus.

3. Outil de forage selon la revendication 2, **caractérisé en ce que** l'extrémité du taillant secondaire (13) située à l'extérieur de la circonférence de la tige présente, par rapport à la pointe de centrage (14), une distance (s) supérieure à celle des extrémités des taillants de centrage (11, 12) situés dans la région de la circonférence de la tige.

4. Outil de forage selon la revendication 2 ou 3, **caractérisé en ce qu'**en vue de côté le taillant secondaire (13) et le taillant central (11) forment, au niveau de la pointe de centrage (14), un angle (α) d'environ 30° à environ 180°.

5. Outil de forage selon la revendication 1, **caractérisé en ce que** la zone du taillant secondaire (113 ; 213, 218) située le plus près radialement de la circonférence de la tige se trouve en retrait d'au moins 2,5 mm par rapport à la pointe de centrage (114 ; 214).

6. Outil de forage selon la revendication 5, **caractérisé en ce qu'**il est prévu deux taillants secondaires (213, 218) qui forment entre eux un angle (β) de 30° à 50°, de préférence d'environ 40°.

7. Outil de forage selon la revendication 5 ou 6, **caractérisé en ce qu'**à chaque taillant secondaire (113 ; 213, 218) est associée une gorge d'évacuation de poussière de forage (117 ; 217, 219) qui, par rapport à la direction de rotation (R) du taillant secondaire (113 ; 213, 218), se trouve à l'arrière et s'étend sensiblement axialement dans la paroi latérale (115 ; 215) de la tête de forage (100, 200).

8. Outil de forage selon une des revendications précédentes, **caractérisé en ce que** la tige (2) est conçue sous forme elliptique, respectivement lenticulaire, le plus grand diamètre (a) de la tige (2) et le plus petit diamètre (b) de la tige (2) orienté perpendiculairement à celui-ci se trouvant dans un rapport d'environ 1,8:1 à environ 1,4:1.

9. Outil de forage selon une des revendications précédentes, **caractérisé en ce que** sur la tige (2) sont prévues des gorges d'évacuation (16) pour de la poussière de forage, lesquelles s'étendent sous forme hélicoïdale vers l'extrémité arrière de la tige (2).

10. Outil de forage selon une des revendications précédentes, **caractérisé en ce que** la tige (2) est divisée en deux et comporte une portion arrière de plus grand diamètre (4) avec l'extrémité insérable (5) et une portion avant de tige plus mince (3), à l'extrémité avant libre de laquelle est fixée la tête de forage (10), la portion avant de tige (3) étant reliée à la portion arrière (4) de manière détachable, et l'épaulement (6) étant disposé à l'extrémité avant de la portion arrière (4) orienté à l'opposé de l'extrémité insérable (5).
